Europäisches Patentamt

(19) European Patent Office

Office européen des brevets

(11) Publication number: **0 002 936**
**A2**

# EUROPEAN PATENT APPLICATION

(21) Application number: 78300877.4

(22) Date of filing: **20.12.78**

(51) Int. Cl.²: **F 02 C 3/20, F 02 C 7/22, C 10 L 3/00, F 23 K 5/00**

(30) Priority: 03.01.78 US 866723

(43) Date of publication of application: **11.07.79**
Bulletin 79/14

(84) Designated Contracting States: DE FR GB IT

(71) Applicant: **ALLIED CHEMICAL CORPORATION, Columbia Road and Park Avenue P.O. Box 1057R Morris Township, Morristown New Jersey 07960 (US)**

(72) Inventor: **Hoehing, William W., 1319A Post Oak Park Drive, Houston Texas 77000 (US)**
Inventor: **Boyce, Meherwan P., 2990 Richmond Avenue Suite 520, Houston Texas 77098 (US)**

(74) Representative: **Baillie, Iain Cameron et al, c/o Ladas, Parry, von Gehr. Goldsmith & Deschamps Blumenstrasse 48, D-8000 München 2 (DE)**

(54) **Process and apparatus for operating a gas turbine on vaporized fuel oil.**

(57) A system for operating a gas turbine includes a vaporized fuel oil unit to generate a gasiform hydrocarbon fuel and a liquid residue, and a turbine VFO fuel system for controlling and injecting the gasiform fuel into the combustor for burning in the presence of combustion air thereby giving increased power output and reduced noxious emissions. Basically, the process includes providing a supply of fuel oil, vaporizing a portion of the fuel oil in the VFO unit to produce a gasiform hydrocarbon fuel and liquid residue, injecting and burning the gasiform fuel in the combustor and then directing the combustion products to drive the turbine. In the system, the VFO unit, which is remote from the combustor, includes means for injecting steam and natural gas, both of which are non-oxidizing. The gasiform fuel is superheated before injection into the combustor. The injection orifices of the nozzle are directed between a 30° and 60° angle from the center line of the combustor. During start-up, the turbine is initially operated by injecting natural gas with gradual switching to VFO until 100% gasiform fuel operation is attained. A heater jacket on the main fuel line maintains the superheat condition and minimizes the transition time during start-up.

PROCESS AND APPARATUS FOR OPERATING A GAS
TURBINE ON VAPORIZED FUEL OIL

## BACKGROUND OF THE INVENTION
### Field of the Invention

The present invention relates to turbines, and more particularly, to a system for operating a turbine on a gasiform hydrocarbon fuel.

### Description of the Prior Art

There is today a large number of industrial turbines that are adapted for burning natural gas. Many power companies and other industries, depend on these turbines for a substantial portion of their power. In the State of Texas alone, approximately ninety percent (90%) of the electrical power is generated by natural gas turbines. With the coming of the natural gas shortage, there has been increasing awareness that these turbines would soon become uneconomical to operate, and indeed, would become obsolete due to possible governmental regulations limiting the industrial uses of natural gas.

One approach has been the attempt to successfully convert turbines to liquid fuel oil. It has been found however that these turbines have high maintenance costs, high noxious emissions and reduced power output. Some attempts have been made in the past to alleviate these problems, such as by providing simple vaporizers in the engine itself in an attempt to obtain the higher efficiency flame needed. One such attempt is shown in the Reichhelm patent 3,320,743, issued May 23, 1967. Insofar as we are aware, even such attempts have been unsuccessful in that the required power output comparable to natural gas could not be obtained, the pollution by oxides of nitrogen ($NO_x$) of such an engine are not acceptable under today's standards and the rapid buildup of deleterious slag and soot residue greatly reduces the time between required maintenance.

Another approach has been to consider utilizing high quality jet fuel used in jet engines for aircraft. However, from the basis of simple economics, the turbines so converted to jet fuel cannot compete with other power sources.

Also, in the field of turbine or jet engines, it has been previously known to inject water vapor or steam into the combustor or combustion chamber to obtain increased mass of combustion products in order to improve the output power of the engine. However, such systems have not gained widespread use because of the inherent weakness of the concept, i.e., the tendency of the droplets of water injection providing differential expansion and contraction of the metal of the engine resulting in warpage, cracking of the metal and eventual destruction of the blades and interior of the engine. For this reason, the experts have stayed away from injecting moisture into the process of running a turbine, and many experts have taken the position that it simply cannot be done.

Prior patent disclosures, including the patent to Aldridge 3,830,994, issued October 1, 1974, have dealt with generating combustible gaseous products by injection of steam into the presence of liquid hydrocarbon fuel oil. Such processes have been improved, such as taught in the Gambrell application, entitled "Process For Preparing A Gasiform Hydrocarbon Fuel From Hydrocarbon Fuel Oil," Serial No. 758,986, filed January 13, 1977 and assigned to the same assignee as the present application. In the Gambrell disclosure, the use of the resultant gasiform fuel is taught as being for such common uses as burning in reforming furnaces used for the manufacture of synthesis gas, e.g., feed gas for the synthesis of ammonia. Because of the drawbacks previously mentioned that have historically been associated with turbine engines where steam has been injected along with the combustion fuel, the experts discounted the use of the Gambrell process in turbine operation. Not only did these experts reject out of hand the possibility for such operation, but never conceived the synergistic result of greatly reduced oxides of nitrogen ($NO_x$) and increased power output achieved by the present invention.

## OBJECTIVES OF THE INVENTION

It is thus a principal object of this invention to provide a system for operating a gas turbine that is highly efficient in terms of power output as well as highly efficient in the minimization of noxious pollutants, such as oxides of nitrogen.

It is another object of the present invention to provide a process and apparatus for operating a turbine including the use of steam for generating the gasiform fuel but without the deleterious effects previously associated with water vapor injection.

It is still another object of the present invention to provide a turbine operation process and apparatus wherein the turbine is operated on vaporized fuel oil without experiencing corrosion problems in the engine, and with the elimination of fuel deposits, such as slag and soot on the engine parts.

It is still another object to provide a turbine operation system that is particularly adapted for retrofitting of existing natural gas fired turbines wherein the conversion from natural gas may be accomplished with minimum expense and mininum down-time of the turbine.

## SUMMARY OF THE INVENTION

To carry out these and other objectives that will be clear to one skilled in the art, a process and apparatus is provided for operating a turbine utilizing a gasiform hydrocarbon fuel converted from fuel oil in a vaporized fuel oil unit remote from the combustor of a gas turbine. The results attained with the present invention of significantly reduced maintenance requirements, reduced noxious emissions and substantially increased power were generally felt to be impossible by the experts in the field. As a part of our invention, we have discovered that the important factors include (1) conversion of the fuel into the gasiform fuel and diverting away the liquid residue, and (2) use of a non-oxidizing gas in the gasiform fuel, preferably steam, injected remote from the combustor of the turbine. When these two factors are included, the greatly improved results can be obtained in operation of the turbine over that which would normally be expected from the teachings in the prior art.

The preferred process for vaporizing the fuel oil is not in and of itself a concept of our invention, and is in fact disclosed and claimed in the copending application of Gambrell, Serial No. 758,986 referred to above. However, the teachings of the Gambrell application are incorporated by this reference as an integral part of the present application to illustrate the preferred manner in which the gasiform hydrocarbon fuel is converted for use in our system.

The injection of the gasiform fuel into the combustor of the turbine brings about the surprising result that in addition to the increased power output and reduced oxides of nitrogen emissions that there is no corrosion of the turbine parts and the slag and soot that has previously thwarted efforts to successfully use fuel oil in turbines is eliminated. With the process and apparatus of this invention, the power output for a given operating temperature is increased by approximately twelve percent (12%). Conversely, a turbine operating at the same design operating power output when natural gas is used, can have a fifteen percent (15%) overall lower temperature when the gasiform hydrocarbon fuel of our invention is used.

The reduced nitrogen oxides ($NO_x$) emissions when utilizing our system is of a particularly great significance today when pollution control is so important. The steam that is added in the vaporized fuel oil unit provides an inert dilutent that significantly deters the formation of these difficult to control emissions. In essence, the steam presence in the vaporized fuel oil dilutes the oxygen in the combustion zone to greatly assist the usual form of dilution, that of adding dilution air downstream of the combustion zone. Since the steam is not directly injected into the combustor, as previously has been taught by the prior art and felt by experts to be avoided in turbine operation, the temperature throughout the combustor is stable with no deleterious zones of differential temperature that can cause warping and cracking of the blades, the combustor wall and other critical parts of the turbine. There has been a complete mixing of the steam and fuel oil in the vaporized fuel oil unit remote from the combustor of the turbine, and consequently the localized pockets of steam and/or fuel that would normally be anticipated are not encountered. The steam presence increases the mass in the combustor and thus provides at least a portion of the increased power output.

Another feature greatly improving the distribution of the fuel and steam mixture in the combustor can is our concept of injection of the fuel gas and steam mixture at an angle of between 30° and 60° with respect to the center axis of the combustor. This concept is particularly important in eliminating the pockets of vapor that would otherwise tend to form along the center axis and propagate downstream of the combustion zone where potential warping and cracking exists. At the same time, this more homogeneous mixing of the fuel gas, steam and combustion air eliminates another root source of noxious emissions, that is, incomplete combustion.

From tests, the optimum angle of the injection ports has been found to be approximately 45°. With such an angle, and at the proper injection pressures, the flame front is ideally formed into a V, with arcuate legs pointed downstream and approaching but spaced from the sidewall of the combustor. A turbulent mixing takes place with the air being introduced through the primary combustion air holes in the sidewall, and the efficiency of the burning is maximized.

Also, a start-up procedure utilizing natural gas is a part of the overall invention. Our concept is to provide pure natural gas at the beginning of operation. Steam is then added until a temperature in the fuel lines is reached of approximately one-half of the operating fuel temperature of the turbine, or approximately 375°F. to 400°F. Alternatively, start-up of the vaporized fuel oil system can also be achieved by preheating the natural gas in the superheater up to about 700°F.; after the headers have reached a temperature between about 700° and 725°F., the vaporized fuel oil is transferred through the headers without condensation, steam is admitted to the oil and the vaporized mixture sent to the burners. Then, over an approximately two-hour period, our method calls for gradually phasing in the vaporized fuel oil or gasiform fuel while proportionately phasing out the natural gas fuel. At full operation, the temperature of the fuel entering the combustor is superheated to about 750°F. In our system, the continued injection of the natural gas to sustain operation is not required and full operation in an efficient manner takes place with only the vaporized fuel oil.

Still other objects and advantages of the present invention will become readily apparent to those skilled in this art from the following detailed description, wherein there is shown and described only the preferred embodiment of the invention, simply by way of illustration of the best mode contemplated of carrying out this invention. As will be realized, the invention is capable of other and different embodiments, and its several details are capable of modification in various obvious respects, all without departing from the invention. Accordingly, the drawings and description are to be regarded as illustrative in nature, and not as restrictive.

BRIEF DESCRIPTION OF THE DRAWINGS

Figure 1 of the accompanying drawings illustrates one system for carrying out the process of operating a turbine on vaporized fuel oil in accordance with the present invention; and

Figure 2 is a further detailed view of critical portions of our system including the combustor of the turbine and the vaporized fuel oil unit utilized to produce the gasiform fuel to be burned in the combustor.

## DETAILED DESCRIPTION OF THE PREFERRED EMBODIMENT

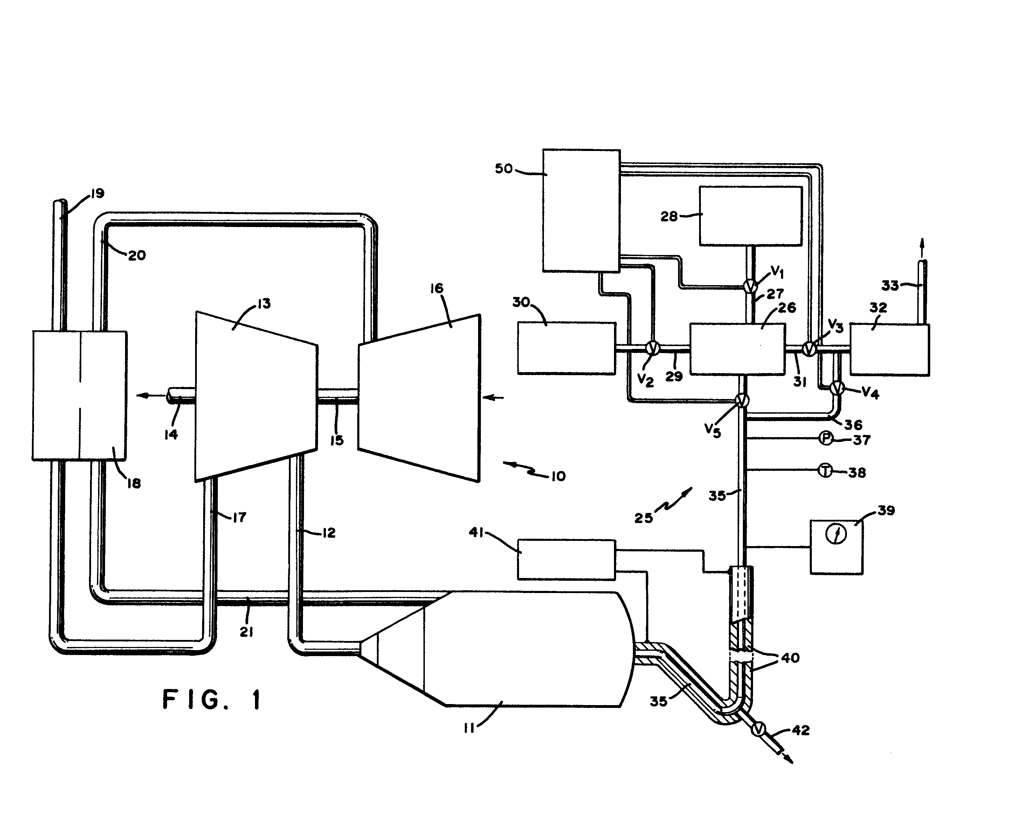

A more detailed description of our system for operating a gas turbine on vaporized fuel oil (VFO) is shown in Figure 1 of the drawings. The system is shown in schematic form, and accordingly it should be understood that in accordance with the broad aspects of the invention, the details, such as the particular type of turbine being utilized to carry out the process of the invention, are not critical. However, as indicated above, the overall system objective of providing a viable alternative to natural gas fired turbines is a reality with our invention. Thus, a gas fired turbine engine, generally designated by the reference numeral 10 includes a combustor can 11 connected by passageway 12 to a driven turbine 13. The output of the turbine 13 is obtained through drive shaft 14 and shaft 15 drives the compressor 16 that compresses the incoming combustion air. The turbine 13 is connected through passageway 17 and optionally may be connected through regenerator 18 to exhaust stack 19.

The high pressure side of the compressor 16 is connected through passageway 20 to regenerator 18 for picking up waste heat and then through passageway 21 to the combustor 11 for supplying the combustion air for the combustion process, which will be described more in detail below. The compressor, alternatively, could be connected directly with the combustor in a non-regenerative mode.

The other half of Figure 1 illustrates the apparatus or hardware for carrying out the critical steps of preparing the hydrocarbon fuel for injection into the combustor 11. Thus, our turbine VFO fuel system, generally designated by the reference numeral 25, is shown in one of its preferred forms, and includes as a heart of the system a vaporized fuel oil (VFO) unit 26. The VFO unit 26 is more fully described below and in the Gambrell copending application, Serial No. 758,986, referred to above and incorporated by reference in the present application. The VFO unit 26 receives: (1) fuel through line 27 from the fuel tank 28; (2) steam through line 29 from boiler 30; and (3) natural gas through line 31 from gas compressor 32 and natural gas inlet 33.

The vaporized fuel oil or gasiform hydrocarbon fuel generated in the VFO unit 26 feeds through main feed line 35 to the combustor 11. For start-up of the engine 10, a bypass line 36 from the gas compressor 32 is provided to the main feed line 35. Pressure gauge 37, thermometer 38 and flow meter 39 monitor the critical parameters of the VFO fuel flowing through the line 35. In order to maintain the superheated state of the gasiform fuel attained in the VFO unit 26, the main feed line 35 may be provided with resistance heating jacket 40 supplied by voltage source 41. In order to allow escape of condensate that might form in the main feed line 35, a blow-down line and valve combination ·42 may be provided. In addition the gas headers can be inclined and a condensate trap attached to the lower end thus allowing any condensate to escape; in this case, the headers are of sufficient diameter to reduce the gas velocity below its entrainment velocity. Preferably, the blow-down line is positioned at the turn where the main feed line is directed to the combustor 11, the location where the condensate inherently forms.

The means for controlling the VFO fuel system of the present invention, is provided by a VFO control 50 designed basically to operate the valves in the system. Thus, valve $V_1$ for the fuel oil, valve $V_2$ for the steam, valve $V_3$ for the natural gas, valve $V_4$ for the natural gas bypass and valve $V_5$ for the output gasiform fuel from the VFO unit 26 are controlled, as shown. Transducers (not shown) in the system may be utilized to provide automatic control of the system through the VFO control 50, if desired. However with the teachings of our invention, the control, including the start-up and shut-down of the engine 10 is greatly simplified and high efficiency is gained even in manual operation with these simple controls.

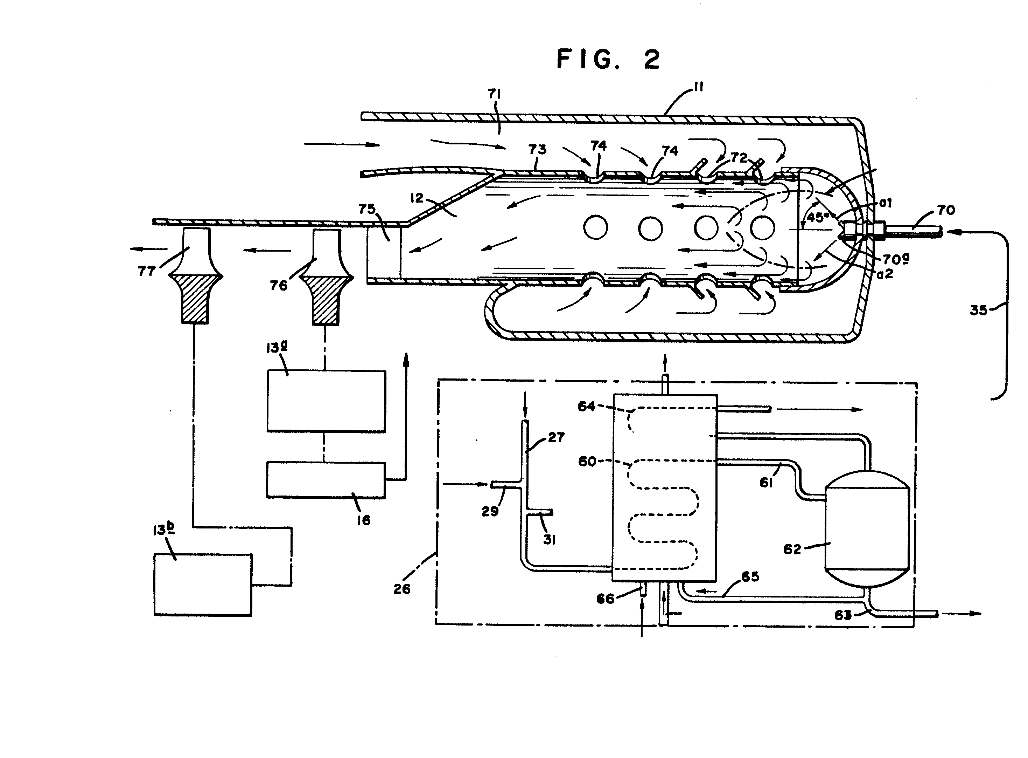

In Figure 2, the VFO unit 26 is shown in more detail. The lines 27, 29, 31 feeding fuel, steam (and/or reducing or inert gas) and natural gas, respectively, all merge into a single line forming heat transfer coil 60 serving as a vaporizer for the mixture and thereby forming the gasiform hydrocarbn fuel and a suspended liquid residue. The mixture is passed through exit line 61 to a conventional separator 62 and the liquid residue is drawn off through pipe 63.

The gasiform fuel is then returned through coil 64 in the vaporizer and then out through main feed line 35 to the combustor 11. The coil 64 serves to superheat the gasiform fuel to a temperature of approximately 100°F. to 200 F. greater than attained in the vaporizer coil 60. A feedback line 65 returns all or any portion of the oil blowdown to the vaporizer/superheater for supplying heat to the furnace. Also, a natural gas line is provided for start-up of the furnace. The burners may be combination gas/oil burners allowing the switch from gas to oil or any combination thereof to be easily attained. The air for combustion is supplied through intake line 66. With this arrangement, the vaporizer is self-sustaining once the system has been started.

Combustor 11 is shown with a gasiform fuel injection nozzle 70. The injection ports 70a in the nozzle 70 are formed at a 45° angle with respect to the center axis of the combustor 11, as shown by the flow arrows $a_1$, $a_2$ in this Figure. This angle represents a selected angle within the range of 30° to 60°, and directs the gasiform fuel in an optimum manner to form the desired arcuate V-shaped flame front in cross section, as shown in Figure 2. The point of the flame front is directed downstream and the front is formed such as to give maximum circulation of the gasiform fuel and air in the combustion zone and minimum chance of concentrated spots of fuel, particularly along the center axis of the combustor that can lead to unburned hydrocarbons (HC) and undesirable carbon monoxide (CO) emissions. The relatively large angle of the ports 70a also ensures longer residence time of the mixture in the combustion zone, thus giving more time to achieve the desired complete combustion.

The compressed air for the combustion enters through the annular chamber 71 directing air through the primary air holes 72 in the inner wall 73 of the combustor. Conventional dilution holes 74 may be formed downstream in the inner wall 73 in order to provide minimization of formation of oxides of nitrogen ($NO_x$). That is, the addition of excess air through holes 74 increases the oxygen content and dilutes the combustion products, which helps to quickly lower the temperature in order to minimize the formation of these noxious emissions.

As stated above, the steam component in the gasiform fuel is non-oxidizing and by dilution of the oxygen in the combustion zone provides an important contribution to minimizing the formation of oxides of nitrogen ($NO_x$). The injected natural gas is also non-oxidizing, and thus can be used in the mixture with this added benefit of reducing noxious emissions. Other non-oxidizing gases, such as purge gases, for example, hydrogen, nitrogen, carbon dioxide and even combustion gases can be used as added components to the mixture, if desired.

Downstream of the dilution chamber are stator blades 75 and a compressor turbine stage 13a with blades 76 receiving the combustion gases and serving to drive the compressor 16. As is well known, the output of the compressor is fed to the compressed air inlet for distribution to the combustor through the chamber 71. Output turbine stage 13b, forms the other part of the turbine 13 and includes the conventional rotor and blades 77, as shown in Figure 1. After leaving the output stage, the combustion gases flow through regenerator 18 and thus after being cooled are exhausted through stack 19.

<div align="center">EXAMPLE OF TURBINE OPERATION</div>

The fuel oil used in this one example is a No. 2 diesel fuel. The test is carried out on a Ford gas turbine converted for operation on the gasiform hydrocarbon fuel of the invention. A critical portion of the conversion is providing the nozzle 70 with injection ports 70a directed so as to provide injection of the gasiform hydrocarbon fuel at the 45° angle with respect to the center axis of the combustor 11.

The test is initiated by igniting the combustor 11 with natural gas supplied through bypass 36 and valve $V_4$. Combustion air from the compressor 16 is provided at 60 pounds per square inch (psi) to the combustor 11. Next, valves $V_2$, $V_3$ are opened to provide a mixture of steam and natural gas to the VFO unit 26. A mixture of natural gas and steam from VFO unit 26 can now be gradually phased in by opening valve $V_5$ and the natural gas being supplied through bypass 36 is gradually phased out. The heated gas and steam raises the temperature of fuel line 35 at the combustor inlet to approximately 400°F. The impedance heater jacket 40 is turned on to provide a constant temperature at the inlet.

Once the fuel line has reached 400°F., a small amount of fuel oil is added by opening valve $V_1$. The VFO unit 26 is activated by burning natural gas or oil in the vaporizer and superheater. This supplies the heat for vaporization and quickly adds additional heat to the fuel line 35 and as a result the flame in the combustor is improved. Initially, the addition of the vaporized fuel oil into the line 35 causes some condensation collecting at the turn just before entering the combustor 11 and this is drained through the blow-down line and valve combination 42. The switch of incoming natural gas from line 36 to line 31 is complete at this point during the start-up of the VFO unit.

Once the vaporized fuel from the VFO unit 26 is injected, the temperature at the combustor inlet quickly rises to a temperature between 600°F. and 650°F. At this point, the flow of natural gas is decreased in small increments as the flow of oil is increased in comparable increments. This is handled by simply controlling the valves $V_1$, $V_3$ through the VFO control 50.

This procedure for start-up where the gasiform fuel from the VFO unit 26 is phased in and the natural gas is phased out, requires approximately two hours. With this start-up procedure, the flame is stable so that the potential of flame-outs is obviated and the desired bluish flame is attained early in the procedure.

The gasiform fuel continues to rise in temperature during start-up to approximately 750°F. This temperature gain mainly occurs in the vaporizer unit through the coils 60, 64. The coil 64 is a superheater in which the gasiform fuel is raised after it leaves the separator 62 by an additional 100°-200°F. and before it enters the feed line 35. The heater jacket 40 shortens the start-up transition time and maintains the superheated condition of the fuel up until it enters the nozzle 70.

It is important that only the gasiform fuel is allowed to be fed through the line 35 to the nozzle 70 for burning in the combustor 11. The residue liquid separated in the separator 62 is taken off through pipe 63 for use in the vaporizer/superheater furnace or other power generating or industrial process units designed to handle such a fuel. Since this residue takes with it the impurities in the oil, this use is in units with efficient pollution abatement equipment.

Once the start-up procedure described above has been completed, the engine 10 is maintained in a highly efficient operation without the use of natural gas so that valve $V_3$ is closed. During operation solely on gasiform hydrocarbon fuel, the bluish flame color is maintained. The flame remains stable without streaks or other imperfections.

The additional desirable parameters established during the test include: (1) the steam from boiler 30 at 375°F. and a pressure of 175 pounds per square inch absolute (psia); (2) the natural gas pressurized for injection into the VFO unit 26 at a pressure of 120 psia; (3) the pressure of the fuel at pressure gauge 37 of 14.5 psi; (4) the flow of gasiform fuel measured at 14.7 pounds per hour on flow meter 39; and (5) the mix of the gasiform fuel maintained at 55-60% steam.

Generally, as the percentage of steam flow is increased (parameter 5, above) both the vaporization of the fuel and the mixing of the air and fuel in the combustor 11 is improved. The luminosity of the flame improves (bluer color), and thus generally, the efficiency of operation is enhanced. As the steam flow is increased to about seventy percent (70%) in this test, the flame front moves closer to the nozzle 70 and the flame-out potential exists.

In summary, very desirable results are obtained from our invention. The gasiform hydrocarbon fuel is clean burning so that the slag and soot within the combustor 11 and the turbine 13 is minimized. The projected maintenance schedule is in fact comparable to operation on natural gas. At the design operating temperature of the combustion gases in passageway 12, that is at the inlet to the turbine 13, the drive output through shaft 14 is increased by at least twelve percent (12%) over comparable operation with other fuels, including natural gas. Conversely, if the engine 10 is operated at the design horsepower, then the temperature in the passageway 12 is significantly reduced, namely a fifteen percent (15%) reduction.

Even at the higher or design operating temperature, noxious emissions, most notably the oxides of nitrogen ($NO_x$) are significantly reduced by the steam presence to well within the standards set by governmental regulations. At the lower turbine inlet temperature attainable at design horsepower operation, the oxides of nitrogen are even further reduced. The favorable residence time of the gasiform fuel due to the preferred angle of injection at ports 70a in combustor 11 and dilution by air through holes 74, provides still another measure of oxygen dilution for gaining this highly desirable result.

Further, the improved results of increased power output, lower operating temperatures and reduced oxides of nitrogen are attained without the deleterious side effect of having steep temperature gradients previously associated with steam injection in the combustor of a turbine engine. By mixing the steam and fuel oil in the VFO unit 26, remote from the combustor 11, the side effect is avoided, and in addition, we have found the efficiency of vaporization is greatly improved.

In this disclosure, there is shown and described only the preferred embodiments of the invention, but, as aforementioned, it is to be understood that the invention is capable of use in various other combinations and environment and is capable of changes or modifications within the scope of the inventive concept as expressed herein.

WHAT IS CLAIMED IS:

1. The process for operating a turbine having a combustor comprising the steps of

providing a supply of hydrocarbon fuel oil having a gravity of abour 10 to 50 degrees A.P.I.;

mixing said fuel oil with a non-oxidizing gas, in proportions of about 0.1 to about 1 pound of non-oxidizing gas per pound of fuel oil;

vaporizing a portion of the fuel oil in a vaporized fuel oil unit remote from the combustor to produce a gasiform fuel mixture of hydrocarbon fuel vapors in said non-oxidizing gas and a liquid residue;

separating said gasiform fuel mixture from said liquid residue;

injecting the gasiform fuel into the combustor of the turbine;

burning the gasiform fuel in the presence of combustion air; and

directing the combustion products to drive the turbine, whereby to give increased power output and reduced noxious emissions.

2. The process of claim 1 wherein the gasiform fuel mixture is superheated following separation from the liquid residue to maintain the gasiform fuel in the vapor state until it is burned.

3. The process of either of claims 1 and 2 wherein the non-oxidizing gas is steam or a mixture of steam and at least one additional non-oxidizing gas selected from the group consisting of natural gas, nitrogen, hydrogen, carbon dioxide and combustion gases recycled from the turbine.

4. The process of any one of claims 1 to 3 wherein is provided the step of start-up of the turbine by injecting natural gas into the combustor and thereafter switching to the gasiform fuel from natural gas to reach full operation on gasiform fuel.

5. The process of any one of claims 1 to 4 wherein the gasiform fuel is injected into the combustor at an angle of between $30^{\circ}$ and $60^{\circ}$ to the center line of the combustor.

6. An apparatus for operating a turbine having a combustor on gasiform hydrocarbon fuel comprising

a supply of liquid hydrocarbon fuel oil having a gravity of about 10 to about 50 degrees A.P.I.;

means for mixing such fuel oil with a non-oxidizing gas;

a vaporized fuel oil unit remote from the combustor for converting the fuel oil to a gasiform hydrocarbon fuel mixture of hydrocarbon fuel vapors in said non-oxidizing gas;

a means for separating the gasiform fuel mixture from the liquid residue;

a means for introducing the gasiform fuel mixture into the combustor of the turbine;

a means for providing combustion air to the combustor; and turbine blades in said turbine to be driven by the combustion products from the combustor;

whereby said turbine provides increased power out-put and reduced. noxious emissions.

7. The apparatus of claim 6 which includes means for superheating the gasiform fuel mixture thereby rendering such fuel suitable for use in a normally gas fired burner without interrupting combustor operation.

8. The apparatus of claim 7 wherein means for vaporizing the fuel oil and superheating the gasiform fuel mixture have sufficient heating capacity to effect both said vaporization and superheating.

9. The apparatus of claim 7 which includes means for introducing said non-oxidizing gas as superheated streams and means for introducing an additional non-oxidizing gas selected from the group consisting of natural gas, nitrogen, hydrogen, carbon dioxide, and combustion gases recycled from the turbine.

10. The apparatus of any one of claims 6 to 9 wherein said vaporized fuel oil unit includes means for introducing steam and means for introducing natural gas, and control means for proportioning the liquid fuel óil, steam and natural gas, whereby to provide maximum start-up and operating efficiency.

11. The apparatus of claim 10 wherein is provided bypass means for feeding pure natural gas to start the turbine.

12. An apparatus for operating a turbine having a combustor normally designed for operation with natural gas while employing a gasiform hydrocarbon fuel which comprises:

a supply of liquid No. 2 fuel oil;

a means for supplying superheated steam;

a means for mixing said superheated steam with said liquid fuel oil;

a means for introducing natural gas together with control means for proportioning the liquid fuel oil, steam and natural gas, thereby providing maximum start-up and operation efficiency;

a means communicating said mixing means with a source of superheated steam, liquid fuel oil and natural gas;

a heater having sufficient heating capacity to effect (a) vaporization of at least a portion of the liquid fuel to produce a gasiform fuel mixture of fuel oil vapor in steam and/or natural gas and a liquid fuel oil residue and (b) superheating of said gasiform fuel mixture thereby rendering such fuel, upon separation of unvaporized liquid fuel residue, suitable for use in the combustor without interrupting combustor operation;

a means for connecting the mixing means with the heater;

a means for separating the gasiform fuel from the liquid residue;

a means connecting the heater with the separating means;

a means for introducing the gasiform fuel mixture into the combustor of the turbine;

a means for providing combustion air to the combustor; and

a means in said turbine to be driven by the combustion products from the combustor;

whereby said turbine provides increased power out-put and reduced noxious emissions.

FIG. 1

**FIG. 2**